**Europäisches Patentamt**

**European Patent Office**

**Office européen des brevets**

(19)

(11) Veröffentlichungsnummer: **0 302 815 B1**

(12) # EUROPÄISCHE PATENTSCHRIFT

(45) Veröffentlichungstag der Patentschrift:
**10.04.91 Patentblatt 91/15**

(51) Int. Cl.⁵: **B60C 27/08**

(21) Anmeldenummer: **88730132.3**

(22) Anmeldetag: **10.06.88**

(54) **Stegglied für Reifenketten.**

(30) Priorität: **11.06.87 DE 3719751**

(43) Veröffentlichungstag der Anmeldung:
**08.02.89 Patentblatt 89/06**

(45) Bekanntmachung des Hinweises auf die
Patenterteilung:
**10.04.91 Patentblatt 91/15**

(84) Benannte Vertragsstaaten:
**AT CH ES GB IT LI**

(56) Entgegenhaltungen:
**AT-B- 385 472**
**DE-A- 1 948 717**
**DE-B- 1 780 717**
**DE-B- 2 352 080**

(73) Patentinhaber: **RUD-Kettenfabrik Rieger &
Dietz GmbH u. Co.
Friedensinsel
W-7080 Aalen 1 (DE)**

(72) Erfinder: **Weidler, Erhard Alfred
Danziger Strasse 32
W-7080 Aalen-Unterkochen (DE)**

(74) Vertreter: **Böning, Manfred, Dr. Ing. et al
Patentanwälte Dipl.-Ing. Dieter Jander Dr. Ing.
Manfred Böning Leistikowstrasse 2
W-1000 Berlin 19 (DE)**

EP 0 302 815 B1

## Beschreibung

Die Erfindung betrifft ein Stegglied für Reifenketten mit mindestens einer Aufnahmeöffnung zum Anschluß von Verbindungsgliedern, mit einem reifenseitigen Gliedteil und einem bodenseitigen Gliedteil.

Ein Stegglied der in Betracht gezogenen Art ist aus der DE-A-19 48 717 bekannt. Bei dem bekannten Stegglied ist der gegenüber dem reifenseitigen Gliedteil breitere bodenseitige Gliedteil mit zwei seitlich vorspringenden Ansätzen versehen, die zur Erhöhung des Verschleißvolumens des bodenseitigen Gliedteiles dienen. Außerdem weist die dem Boden zugewandte Fläche des bekannten Steggliedes zur Erhöhung der Griffigkeit unmittelbar benachbart zu den Ansätzen kanalförmige Ausnehmungen auf, die sich bis zu den Seitenflächen des bodenseitigen Gliedteiles erstrecken, d.h. an beiden Enden offen sind. Diese Ausnehmungen dienen zur Gewichtsverringerung und zur die Standzeit des Steggliedes günstig beeinflussenden Vergrößerung der einsatzgehärteten Bodenaufstandsfläche des Steggliedes. Da die Ansätze des bekannten Steggliedes vergleichsweise weit über die Seitenflächen des bodenseitigen Gliedteiles vorstehen, sind bei entsprechenden Bodenbedingungen außermittig angreifende Kräfte nicht vermeidbar. Diese Kräfte suchen die Stegglieder zu kippen und führen so zu ungünstigen Belastungen sowohl der Stegglieder als auch der mit ihnen verbundenen Anschlußglieder. Dabei erweisen sich die seitlich offenen, in unmittelbarer Nähe der Ansätze angeordneten Ausnehmungen als nicht eben die Gestaltfestigkeit des Steggliedes fördernd.

Der Erfindung liegt die Aufgabe zugrunde, ein Stegglied der in Betracht gezogenen Art zu schaffen, bei dem durch eine spezielle Oberflächenstruktur ein besonders ausgewogenes Verhältnis zwischen Gestalt- und Verschleißfestigkeit erzielt wird. Diese Aufgabe wird bei einem gattungsgemäßen Stegglied dadurch gelöst, daß mindestens eine Seitenfläche des bodenseitigen Gliedteiles mit jeweils einer Vielzahl von zur Vergrößerung der Seitenfläche dienenden Mulden versehen ist.

Das erfindungsgemäße Stegglied bietet den Vorteil einer durch Vergrößerung der vorzugsweise gehärteten Oberfläche erhöhten Verschleißbeständigkeit, ohne daß die Oberflächenvergrößerung durch eine Verminderung der Gestaltfestigkeit erkauft werden muß und ohne die Notwendigkeit einer Erhöhung des Verschleißvolumens durch Ansätze, die die Einleitung von Kippkräften begünstigen.

Weitere Merkmale und Einzelheiten der Erfindung ergeben sich aus den Unteransprüchen und der nachstehenden Beschreibung eines in der beigefügten Zeichnung dargestellten bevorzugten Ausführungsbeispieles. Es zeigen :

Fig. 1 die Seitenansicht eines Steggliedes ;

Fig. 2 die boden- bzw. fahrbahnseitige Ansicht des Steggliedes gemäß Fig. 1 ;

Fig. 3 einen Teil der reifenseitigen Ansicht des Steggliedes gemäß Fig. 1 und einen Teilschnitt längs der Linie III-III in Fig. 1 und

Fig. 4 einen Schnitt längs der Linie IV-IV in Fig. 2.

Das in der Zeichnung dargestellte Stegglied besitzt einen dem Boden bzw. der Fahrbahn zugewandten bodenseitigen Gliedteil 1 und einen dem Reifen zugewandten reifenseitigen Gliedteil 2, der etwas schmaler als der bodenseitige Gliedteil 1 ist. Die Gliedteile 1 und 2 sind durch Stege 3, 4 und 5 miteinander verbunden, die Aufnahmeöffnungen 6 und 7 zum Anschluß von Verbindungsgliedern umschließen. In der Praxis sind die Stegglieder im Netz einer Reifenkette senkrecht zur Reifenaußenfläche, die regelmäßig von Ringen gebildeten Verbindungsglieder dagegen parallel zur Reifenaußenfläche orientiert.

Stegglieder der dargestellten Art müssen hohen Anforderungen hinsichtlich ihrer Verschleißbeständigkeit, Bruchsicherheit und Dauerfestigkeit genügen. Sie sind in üblicher Weise randschicht- oder einsatzgehärtet, da eine Durchhärtung nicht nur einen erhöhten Arbeitsaufwand mit sich bringt und die Verwendung teurerer Stähle voraussetzt, sondern auch die Dauerfestigkeit der Kettenglieder beeinträchtigt.

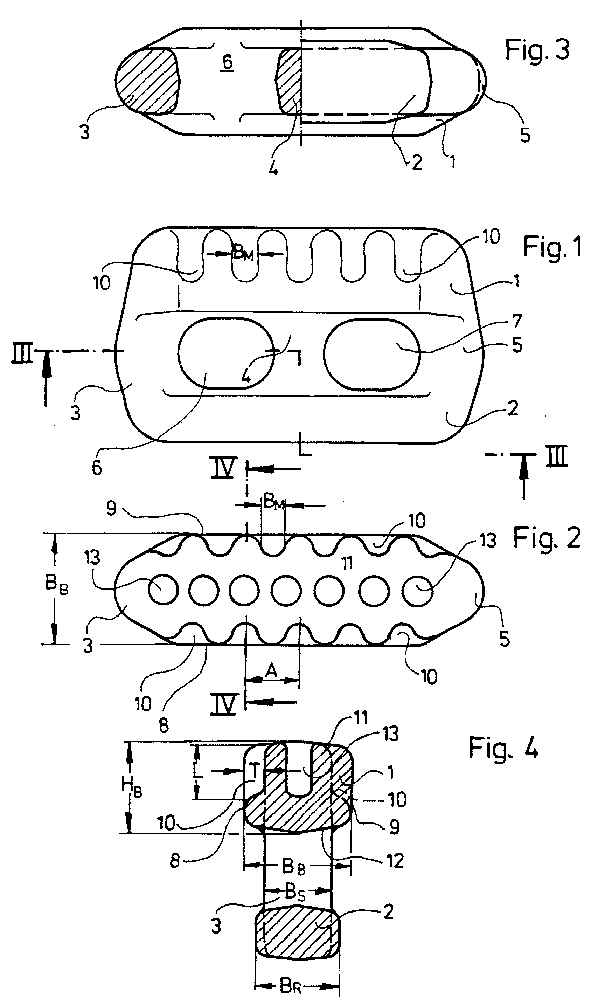

Zur Erzielung einer großen Verschleißbeständigkeit ist der bodenseitige Gliedteil 1 des Steggliedes an seinen Seitenflächen 8 und 9 mit wellenförmig angeordneten Mulden 10 versehen, deren Tiefe T vorzugsweise kleiner als die mittlere Breite $B_M$ der Mulden 10, höchstens aber gleich dem Abstand A jeweils zweier aufeinanderfolgender Mulden 10 ist. Die Mulden 10 sind an nur drei Seiten geschlossen, d.h. nicht nur seitlich, sondern auch an ihren der Aufstandsfläche 11 des Gliedteiles 1 zugewandten Enden offen. Dadurch, daß die Länge L der Mulden 10 zwar größer als ihre mittlere Breite $B_M$, aber kleiner als die Höhe H des bodenseitigen Gliedteiles 1 ist, erhält man eine glatte, sattelförmige Stützfläche 12, gegen die sich die in die Aufnahmeöffnungen 6,7 eingehängten Verbindungsglieder abstützen können. An die Stelle von zur jeweiligen Seitenfläche 8 bzw. 9 und zur Aufstandsfläche 11 offenen Mulden 10 können auch topfartig ausgebildete, nur zur jeweiligen Seitenfläche offene Mulden treten. Um den Querschnitt des Gliedteiles 1 überall annähernd konstant zu halten, sind die Mulden 10 an der Seitenfläche 8 gegenüber den Mulden 10 an der Seitenfläche 9 versetzt angeordnet, wie dies aus den Figuren 2 und 4 erkennbar ist.

In die Aufstandsfläche 11 des bodenseitigen Gliedteiles 1 münden nicht nur die offenen Enden der Mulden 10, sondern auch die Enden von sackloch- bzw. topfartig ausgebildeten Mulden 13, deren Tiefe der Länge L der Mulden 10 entspricht. Die Anbringung von Mulden 13 in der Aufstandsfläche 11 wirkt sich beim Einsatz von mit Steggliedern ausgestatteten Ketten in stark abrasivem Gestein insofern positiv aus, als Gesteinskörner in die Mulden 13 eindringen, dort verdichtet werden und aufgrund ihrer gegenüber den Steggliedern größeren Härte verschleißhemmend wirken.

Durch die gezielte "Zerklüftung" der dem Verschleiß besonders stark ausgesetzten Außenflächen des Steggliedes läßt sich das gehärtete Verschleißvolumen vergrößern, ohne daß es einer kostenintensiven Erhöhung der Härtetiefen bedarf.

## Ansprüche

1. Stegglied für Reifenketten mit mindestens einer Aufnahmeöffnung (6, 7) zum Anschluß von Verbindungsgliedern, mit einem reifenseitigen Gliedteil (2) und einem bodenseitigen Gliedteil (1), dadurch gekennzeichnet, daß mindestens eine Seitenfläche (8, 9) des bodenseitigen Gliedteiles (1) mit jeweils einer Vielzahl von zur Vergrößerung der Seitenfläche (8, 9) dienenden Mulden (10) versehen ist.

2. Stegglied nach Anspruch 1, dadurch gekennzeichnet, daß an beiden Seitenflächen (8, 9) wellenförmig ausgebildete Mulden (10) angeordnet sind.

3. Stegglied nach Anspruch 1 oder 2, dadurch gekennzeichnet, daß auf sich gegenüberliegenden Seitenflächen (8, 9) gelegene Mulden (10) zueinander versetzt angeordnet sind.

4. Stegglied nach dem Oberbegriff des Anspruches 1 oder einem der Ansprüche 1 bis 3, dadurch gekennzeichnet, daß seine dem Boden zugewandte Aufstandsfläche (11) ebenfalls mit einer Vielzahl von Mulden (13) versehen ist.

5. Stegglied nach einem der Ansprüche 1 bis 4, dadurch gekennzeichnet, daß die Mulden (13) an mindestens drei Seiten geschlossen sind.

6. Stegglied nach einem der Ansprüche 1 bis 5, dadurch gekennzeichnet, daß die an den Seitenflächen (8, 9) angeordneten Mulden (10) an ihren der Aufstandsfläche (11) zugewandten Enden offen, an ihren den Aufnahmeöffnungen (6, 7) zugewandten Enden dagegen geschlossen sind.

7. Stegglied nach einem der Ansprüche 1 bis 6, dadurch gekennzeichnet, daß seine Seitenflächen (8, 9) mit nach zwei Seiten offenen Mulden (10), seine Aufstandsfläche (11) dagegen mit an nur einer Seite offenen Mulden (13) versehen sind bzw. ist.

8. Stegglied nach einem der Ansprüche 1 bis 7, dadurch gekennzeichnet, daß die Mulden (13) als Sacklöcher ausgebildet sind.

9. Stegglied nach einem der Ansprüche 1 bis 6, dadurch gekennzeichnet, daß seine Mulden (10) eine Riffelung bilden.

10. Stegglied nach einem der Ansprüche 1 bis 9, dadurch gekennzeichnet, daß die Tiefe (T) der an den Seitenflächen (8, 9) angeordneten Mulden (10) höchstens gleich dem Abstand (A) aufeinanderfolgender Mulden (10) ist.

11. Stegglied nach einem der Ansprüche 1 bis 10, dadurch gekennzeichnet, daß die Tiefe (T) der an den Seitenflächen (8, 9) angeordneten Mulden (10) höchstens gleich der mittleren Breite ($B_M$) der Mulden (10) ist.

12. Stegglied nach einem der Ansprüche 1 bis 11, dadurch gekennzeichnet, daß die Länge (L) der an den Seitenflächen (8, 9) angeordneten Mulden (10) größer als ihre mittlere Breite ($B_M$) ist.

13. Stegglied nach einem der Ansprüche 1 bis 12, dadurch gekennzeichnet, daß die der Aufnahmeöffnung bzw. den Aufnahmeöffnungen (6, 7) zugewandte Fläche (12) des mit Mulden (10) versehenen Gliedteiles (1) über die gesamte Gliedteilbreite ($B_B$) frei von Mulden (10) ist.

14. Stegglied nach einem der Ansprüche 1 bis 13, dadurch gekennzeichnet, daß sein bodenseitiger Gliedteil (1) breiter als sein reifenseitiger Gliedteil (2) ist.

15. Stegglied nach einem der Ansprüche 1 bis 14, dadurch gekennzeichnet, daß der bodenseitige Gliedteil (1) und der reifenseitige Gliedteil (2) über zwei Aufnahmeöffnungen (6, 7) zwischen sich einschließende Stege (3, 4, 5) miteinander verbunden sind, deren Breite ($B_S$) kleiner als die Breite ($B_R$) des reifenseitigen Gliedteiles (2) ist.

16. Stegglied nach einem der Ansprüche 1 bis 13, dadurch gekennzeichnet, daß der reifenseitige Gliedteil (2) und der bodenseitige Gliedteil (1) identisch ausgebildet sind.

17. Stegglied nach einem der Ansprüche 1 bis 16, dadurch gekennzeichnet, daß es randschicht- bzw. einsatzgehärtet ist.

## Claims

1. A stud link for tyre chains having at least one reception opening (6, 7) for attachment of connection links, having a tyre-side link part (2) and a ground-side link part (1), characterised in that at least one side face (8, 9) of the ground-side link part (1) is provided in each case with a plurality of troughs (10) serving to enlarge the side face (8, 9).

2. A stud link according to Claim 1, characterised in that troughs (10) having an undulatory form are arranged on both side faces (8, 9).

3. A stud link according to Claim 1 or 2, characterised in that troughs (10) formed on opposite side faces (8, 9) are arranged staggered in relation to one another.

4. A stud link according to the Opening Statement of Claim 1 or any one of Claims 1 to 3, characterised in that its standing surface (11) facing the ground is likewise provided with a plurality of troughs (13).

5. A stud link according to any one of Claims 1 to 4, characterised in that the troughs (13) are closed on at least three sides.

6. A stud link according to any one of Claims 1 to 5, characterised in that the troughs (10) arranged on the side faces (8, 9) are open at their ends facing the standing surface (11) but are closed at their ends facing the reception openings (6, 7).

7. A stud link according to any one of Claims 1 to 6, characterised in that its side faces (8, 9) are provided with troughs (10) open to two sides, while on the other hand its standing surface (11) is provided with troughs (13) open on only one side.

8. A stud link according to any one of Claims 1 to 7, characterised in that the troughs (13) are formed as blind holes.

9. A stud link according to any one of Claims 1 to 6, characterised in that its troughs (10) form a corrugation.

10. A stud link according to any one of Claims 1 to 9 characterised in that the depth (T) of the troughs (10) arranged on the side faces (8, 9) is, at most, equal to the interval (A) of successive troughs (10).

11. A stud link according to any one of Claims 1 to 10, characterised in that the depth (T) of the troughs (10) arranged on the side faces (8, 9) is, at most, equal to the mean width ($B_M$) of the troughs (10).

12. A stud link according to any one of Claims 1 to 11, characterised in that the length (L) of the troughs (10) arranged on the side faces (8, 9) is greater than their mean width ($B_M$).

13. A stud link according to any one of Claims 1 to 12, characterised in that the face (12) of the link part (1) provided with troughs (10), which face faces the reception opening or openings (6, 7), is free from troughs (10) over the whole link part width ($B_B$).

14. A stud link according to any one of Claims 1 to 13, characterised in that its ground-side link part (1) is wider than its tyre-side link part (2).

15. A stud link according to any one of Claims 1 to 14, characterised in that the ground-side link part (1) and the tyre-side link part (2) are connected with one another through joining pieces (3, 4, 5) enclosing two reception openings (6, 7) between them, the width ($B_S$) of which is less than the width ($B_R$) of the tyre-side link part (2).

16. A stud link according to any one of Claims 1 to 13, characterised in that the tyre-side link part (2) and the ground-side link part (1) are made identical.

17. A stud link according to any one of Claims 1 to 16, characterised in that it is surface-layer hardened or case-hardened.

## Revendications

1. Maillon à étai pour chaînes de pneumatiques, avec au moins une ouverture réceptrice (6, 7) pour le raccordement de maillons d'assemblage, avec une partie de maillon (2) du côté du pneumatique et une partie de maillon (1) du côté du sol, caractérisé en ce qu'au moins une face latérale (8, 9) de la partie de maillon (1) du côté du sol est pourvue d'une multiplicité de dépressions (10) servant à augmenter la face latérale (8, 9).

2. Maillon à étai selon la revendication 1, caractérisé en ce que des dépressions (10) sont disposées en forme d'onde sur les deux faces latérales (8, 9).

3. Maillon à étai selon la revendication 1 ou 2, caractérisé en ce que les dépressions (10) qui se trouvent sur des faces latérales en vis-à-vis (8, 9), sont disposées décalées les unes par rapport aux autres.

4. Maillon à étai selon le préambule de la revendication 1 ou selon l'une des revendications 1 à 3, caractérisé en ce que sa face de contact (11) tournée vers le sol est également pourvue d'une multiplicité de dépressions (13).

5. Maillon à étai selon l'une des revendications 1 à 4, caractérisé en ce que les dépressions (13) sont fermées sur au moins trois côtés.

6. Maillon à étai selon l'une des revendications 1 à 5, caractérisé en ce que les dépressions (10) disposées sur les faces latérales (8, 9), sont ouvertes à leurs extrémités tournées vers la face de contact (11), mais fermées à leurs extrémités tournées vers les ouvertures réceptrices (6, 7).

7. Maillon à étai selon l'une des revendications 1 à 6, caractérisé en ce que ses faces latérales (8, 9) sont pourvues de dépressions (10) ouvertes vers deux côtés, tandis que sa face de contact (11) est pourvue de dépressions (13) ouvertes uniquement d'un côté.

8. Maillon à étai selon l'une des revendications 1 à 7, caractérisé en ce que les dépressions (13) sont réalisées sous la forme de trous borgnes.

9. Maillon à étai selon l'une des revendications 1 à 6, caractérisé en ce que ses dépressions (10) forment une cannelure.

10. Maillon à étai selon l'une des revendications 1 à 9, caractérisé en ce que la profondeur (T) des dépressions (10) disposées sur les faces latérales (8, 9) est au plus égale à l'écartement (A) de dépressions (10) qui se suivent.

11. Maillon à étai selon l'une des revendications 1 à 10, caractérisé en ce que la profondeur (T) des dépressions (10) disposées sur les faces latérales (8, 9) est au plus égale à la largeur moyenne ($B_M$) des dépressions (10).

12. Maillon à étai selon l'une des revendications 1 à 11, caractérisé en ce que la longueur (L) des dépressions (10) disposées sur les faces latérales (8, 9) est supérieure à leur largeur moyenne ($B_M$).

13. Maillon à étai selon l'une des revendications 1 à 12, caractérisé en ce que la face (12) de la partie de maillon (1) pourvue de dépressions (10) qui est tournée vers l'ouverture réceptrice ou les ouvertures réceptrices (6, 7), est, sur toute la largeur ($B_B$) de la partie de maillon, exempte de dépressions (10).

14. Maillon à étai selon l'une des revendications 1 à 13, caractérisé en ce que sa partie de maillon (1) du côté du sol est plus large que sa partie de maillon 12) du côté du pneumatique.

15. Maillon à étai selon l'une des revendications 1 à 14, caractérisé en ce que la partie de maillon (1) du côté du sol et la partie de maillon (2) du côté du pneumatique sont mutuellement assemblées par des étais (3, 4, 5), qui incluent entre eux deux ouvertures réceptrices (6, 7) et dont la largeur ($B_S$) est inférieure à la largeur ($B_R$) de la partie de maillon (2) du côté du pneumatique.

16. Maillon à étai selon l'une des revendications 1 à 13, caractérisé en ce que la partie de maillon (2) du côté du pneumatique et la partie de maillon (1) du côté du sol présentent des configurations identiques.

17. Maillon à étai selon l'une des revendications 1 à 16, caractérisé en ce qu'il est durcit superficiellement ou par cémentation.

Fig. 3

Fig. 1

Fig. 2

Fig. 4